# EUROPÄISCHE PATENTSCHRIFT

(11) **EP 2 254 964 B1**
(45) Veröffentlichungstag und Bekanntmachung des Hinweises auf die Patenterteilung: **12.02.2014**
(21) Anmeldenummer: 09721751.7
(22) Anmeldetag: 09.03.2009
(51) Int. Cl.: B01J 20/10, B01J 20/12, B01J 20/18, B01J 20/32, B01J 20/28, C09K 3/32

(54) **VERFAHREN ZUR HERSTELLUNG EINES ÖLBINDEMITTELS**
METHOD FOR PRODUCING AN OIL BINDING AGENT
PROCÉDÉ DE FABRICATION D'UN AGENT D'ABSORPTION DES HUILES

(30) Priorität: 17.03.2008 AT 4242008
(43) Veröffentlichungstag der Anmeldung: 01.12.2010
(73) Patentinhaber: Commerzialbank Mattersburg im Burgenland Aktiengesellschaft, 7210 Mattersburg (AT)
(72) Erfinder: PHILIPP, Franz, Josef, A-7212 Forchtenstein (AT)
(74) Vertreter: Patentanwälte Barger, Piso & Partner
(86) Internationale Anmeldenummer: PCT/AT2009/000095
(87) Internationale Veröffentlichungsnummer: WO 2009/114881

(56) Entgegenhaltungen:
- EP-A- 0 094 363
- WO-A-93/18111
- WO-A-2007/085031
- US-A- 2 634 208
- US-A- 3 855 152
- US-A1- 2002 014 209

## Beschreibung

Die Erfindung betrifft ein Verfahren zur Herstellung eines Ölbindemittels unter Verwendung von hochporösem natürlichem silikatischem Material und organikhaltigem Reststoff. Mit "hochporös" werden Materialien mit einem Porenvolumen von mindestens 60, vorzugsweise ca. 70 bis 90 % bezeichnet.

Aus der WO 2007/085031 ist ein Verfahren zur Herstellung eines Ölbindemittels granularer, offenporiger Struktur mit silikatkeramischer Matrix unter Verwendung von Papierfangstoff, Klärschlamm und Ton in der Rohmasse bekannt, wobei die durch Mischen erhaltene und zu Partikeln mittleren Durchmessers zwischen 4 bis 6 mm verarbeitete Rohmasse nach Trocknung bei 950 -1050° C gebrannt wird.

In diesem Dokument ist aber auch geoffenbart, dass aus der Praxis verschiedene Ölbinder bekannt sind, die aus anorganischem Material, beispielsweise natürlichen silikatischen Ursprungs, wie Diatomeenerde bzw. Kieselgur oder Bimsstein bestehen.

Die EP 0 353 605 A1 offenbart die Verwendung eines mineralischen Stoffes, wie Ton bzw. Tonminerale, zum Aufsaugen von Flüssigkeiten, wie z.B. fluiden Brenn- und Schmierstoffen wie Benzin und Öl. Dazu müssen Ton bzw. Tonminerale bei Temperaturen oberhalb 650° C jedoch unterhalb Sintertemperatur bis etwa 1200° C gebrannt werden, um dadurch die Tonmineralstruktur zu zerstören und schließlich ein nicht zusammensinterndes, poröses Material zu erhalten. Zur Erhöhung des Anteils offener Porosität können den mineralischen Soffen vor dem Brennvorgang noch organikhaltige Porosierungsstoffe zugesetzt werden.

In JP 61000284 A (Abstract) ist ein ölbindendes Granulat geoffenbart, das mittels Körnung und Trocknen einer Mischung feinen anorganischen Pulvers, das Ton und organisches Bindemittel enthält, hergestellt ist. Zur Steigerung der Porostiät des nur mäßig kapillarporösen Granulats kann auch noch Sägemehl, Vermiculit oder Perlit zugesetzt sein.

Im Abstract von JP 07265696 A ist ein Ölbindemittel geoffenbart, das durch Vermischen von organischem Bindemittel mit trockenem granulierten Papierfangstoff und Zeolith und nachfolgendem Trocknen hergestellt wird. Speziell durch den hohen Zeolithanteil ist dieses Ölbindmittel hinsichtlich seiner Herstellung einerseits teuer und hat anderseits dadurch auch nur eine beschränkte Einsatzmöglichkeit.

US 3 856 152 A offenbart das Vermischen von expandiertem Perlit und Asphalt mit faserigem Füllstoff, wobei von der Herstellung einer wässerigen, die genannten Bestandteile enthaltenden Mischung ausgegangen wird, um einen zusammenhängenden, tafel- oder plattenförmigen Körper zu bilden, der in einem Ofen durch Erwärmen entwässert und danach durch Vermahlen zu Teilchen zerkleinert wird.

US 2 634 208 A offenbart die Herstellung von Bau- oder Isolierplatten aus einem Gemisch von mit Thermoplasten, z.B. Asphalt beschichtetem expandiertem Perlit und einem Fasermaterial in einem üblichen Nassverfahren, wobei als Fasermaterial u.a. Holzzellstoff oder Papierpulpe eingesetzt wird.

Aufgabe der Erfindung ist nun die Schaffung eines Verfahrens zur einfachen und kostengünstigen Herstellung eines Ölbindemittels unter Verwendung von hochporösem, natürlichem, silikatischem Material und organikhaltigem Reststoff mit dem Ziel, dem fertigen Ölbindmittel eine merklich erhöhte Gesamtporosität zu verleihen als sie das als wesentlichen Ausgangsbestandteil eingesetzte bereits hochporöse Material aufweist.

Die Lösung dieser Aufgabe besteht gemäß des Verfahrens der Erfindung darin, dass das hochporöse natürliche silikatische Material mit einer Eingangskomgröße zwischen 4 und 10 mm mit dem organikhaltigen Reststoff vermischt, das Gemisch bei einer Temperatur zwischen 520 und 550° C kalziniert und danach auf ein im wesentlichen zwischen 4 und 0,125 mm betragendes Korngrößenspektrum zerkleinert wird.

Ein wesentlicher Verfahrensparameter der Kombination der einzelnen Verfahrensschritte ist die zwischen 520 und 550° C liegende Kalzinierungstemperatur, der das Gemisch ausgesetzt wird. Damit ist gewährleistet, dass die Porenstruktur des eingesetzten hochporösen natürlichen silikatischen Materials keinesfalls beeinträchtigt wird, sondern vielmehr eine durch Anlagerung der Rückstände des verbrannten Organikteils des organikhaltigen Reststoffs am hochporösen natürlichen silikatischen Material bedingte Steigerung der Ölbindefähigkeit des so hergestellten Ölbindemittels nach sich zieht. Überdies ermöglicht der organikreiche Reststoff das Kalzinieren des Ölbinders mit nur sehr geringem zusätzlichem Energieverbrauch.

Nach einem Merkmal der Erfindung wird das hochporöse natürliche silikatische Material und organikhaltiger Reststoff in einem Gewichts-Verhälnis zwischen 75 : 25 und 95 : 5 bezogen auf das Gewicht der Trockenmasse vor dem Kalzinieren eingesetzt.

Das Verfahren gemäß der Erfindung ist ferner dadurch gekennzeichnet, dass als hochporöses natürliches silikatisches Material Bimsstein, Bimsgranulat (Lapili) und/oder Schaumlava bzw. schaumiges vulkanisches Gestein und als organikhaltiger Reststoff Papierfangstoff und/oder Klärschlamm eingesetzt werden.

Nach einer Ausgestaltung des erfindungsgemäßen Verfahrens werden dem Gemisch vor dem Kalzinieren Zeolith und/oder Bentonit in einer Menge von maximal 5 Gew.-% bezogen auf die Gewichtsmenge des Gemischs zugemischt, wovon im Bedarsfall zur Schadstoffbindung Gebrauch gemacht werden kann.

Entsprechend des Prinzips des erfindungsgemäßen Herstellungsverfahrens werden je nach Art des organikhaltigen bzw. -reichen Reststoffs dieser und das hochporöse natürliche silikatische Material als die beiden Ausgangskomponenten für das herzustellende Ölbindemittel vor dem vorteilhafter Weise im Drehrohrofen erfolgenden Kalzinieren in einem Mischer bereits innig miteinander vermengt oder nur gemeinsam in den Drehrohrofen eingebracht und durch den Brand im Drehrohrofen miteinander vermengt. Beim Brand bilden die sehr feinkörnigen mineralischen Anteile der organikreichen Reststoffe feinporige, Flüssigkeiten stark absorbierende Überzüge auf den Körnern der silikatischen Materialkomponente bzw. entsprechende Matrix zwischen den Partikeln der silikatischen Materialkomponente, sofern diese Komponente als feinkörniges Material vorliegt und vor dem Kalzinieren zusammen mit dem organikreichen Reststoff ein Granulat (der gewünschten Korngrößenverteilung) hergestellt wird.

Die Herstellung des gewünschten Korngrößenspektrums des Ölbinders geschieht entweder durch Granulieren des Gemisches vor dem Kalzinieren oder mittels Walzwerkes des kalzinierten Produktes, gegebenenfalls unter Siebung und Staubabzug. Nach dem erfindungsgemäßen Verfahren sind die Brenntemperatur und die Ofenatmosphäre beim Kalzinieren so eingestellt, dass die Entkarbonisierung von vorhandenen CaCO₃-haltigen Phasen und die Oxidation von Chrom(-Verbindungen) zu Cr VI ohne Bedeutung für die Eigenschaften des fertigen Produktes sind - unter Einhaltung der Grenzwerte entsprechend der gültigen Normen.

Hochporöse natürliche silikatische Materialien, wie z.B. Bims, besitzen auf Grund ihrer Porosität schon für sich ein erhebliches Ölbindvermögen. Auf Grund ihrer mechanischen Festigkeit ermöglichen solche Materialien den Einsatz des Ölbinders auf Verkehrsflächen. Außerdem können diese Materialien als Rohststoffzuschläge und (ölgesättigt) als Energieträger verwendet werden.

Der orgänikreiche Reststoff steigert die Ölbindfähigkeit und dient gleichzeitig als Energieträger, der das Kalzinieren des Ölbindergemisches mit nur geringem zusätzlichem Energieverbrauch ermöglicht.

Das Ölbindevermögen, wie auch die Schüttdichte hängen sowohl von Art und Menge des eingesetzten organikhaltigen Reststoffes als auch von der verwendeten natürlichen silikatischen Materialkomponente ab. Von wesentlichem Einfluss auf diese Parameter ist auch die Korngrößenverteilung des fertigen Produktes. Bei Erfüllung der Norm für die Korngrößenverteilung der Standardform des Ölbinders vom Typ III/R gemäß LTwS-Nr. 27 (Fassung vom Juni 1999) liegt entsprechend der oben bereits genannten Variablen (Mischungsverhältnisse) ein Ölbindevermögen zwischen etwa 0,40 und 0,48 1 pro Liter Ölbinder vor.

Im Vergleich zum erfindungsgemäß hergestellten Ölbindemittel sei darauf verwiesen, dass roher natürlicher Bims ein Ölbindevermögen von etwa 0,321 pro Liter aufweist.

Herstellungsbeispiel für Ölbindemittel gemäß der Erfindung:
Bims mit einer Ausgangskorngröße zwischen 4 bis 10 mm und Papierfangstoff werden gemeinsam im Massenverhältnis bezogen auf die Trockenmasse Bims : Papierfangstoff von 92 : 8 in einen Drehrohrofen eingebracht und durch den Brand im Drehrohrofen miteinander vermischt. Beim Brand (Kalzinieren) bilden die sehr feinkörnigen mineralischen Anteile des organikhaltigen (-reichen) Reststoffes feinporige, Flüssigkeiten stark absorbierende Überzüge auf den Bimskörnern. Die Brenntemperatur liegt zwischen 520 und 550° C. Dabei wird die Organik vollständig verbrannt, die Entkarbonisierung des mineralischen Anteils des Papierfangstoffes jedoch weitgehend vermieden, was für den pH-Wert des Eluats von Bedeutung ist. Nach dem Kalzinieren wird mittels Walzwerkes das gewünschte Korngrößenspektrum des kalzinierten Produktes hergestellt.
   Eigenschaften des so hergestellten Ölbindemittels:
   Korngrößenparameter:
      Grobanteil > 4 mm = < 0,1 Gew.-%
      4-0,5mm = 52,0 Gew.-%
      0,5 - 0,125 mm = 45,0 Gew.-%
      Feinkornanteil < 0,125 mm = < 3,0 Gew.-%
   Schüttgewicht: 332 kg/m³
   Ölbindevermögen: 11 Ölbindemittel bindet 0,401 Öl Gew.-%

Alle Grenzwerte entsprechend der Norm LTwS 27 i.d. Fassung Juni 1999 für einen Ölbinder Typ III werden eingehalten.

## Patentansprüche

1. Verfahren zur Herstellung eines Ölbindemittels unter Verwendung von hochporösem natürlichem silikatischem Material und organikhaltigem Reststoff, **dadurch gekennzeichnet, dass** das hochporöse natürliche silikatische Material mit einer Eingangskomgröße zwischen 4 und 10 mm mit dem organikhaltigen Reststoff vermischt, das Gemisch bei einer Temperatur zwischen 520 und 550° C kalziniert und danach auf ein zwischen 4 und 0,125 mm betragendes Korngrößenspektrum zerkleinert wird.

2. Verfahren nach Anspruch 1, **dadurch gekennzeichnet, dass** hochporöses natürliches silikatisches Material und organikhaltiger Reststoff in einem Gewichts-Verhälnis zwischen 75 : 25 und 95 : 5 bezogen auf das Gewicht der Trockenmasse vor dem Kalzinieren eingesetzt wird.

3. Verfahren nach einem der Ansprüche 1 bis 2, **dadurch gekennzeichnet, dass** als hochporöses natürliches silikatisches Material Bims, Bimsstein bzw. Bimsgranulat eingesetzt wird.

4. Verfahren nach einem der Ansprüche 1 bis 2, **dadurch gekennzeichnet, dass** als hochporöses natürliches silikatisches Material Schaumlava bzw. schaumiges vulkanisches Gestein eingesetzt wird.

5. Verfahren nach einem der Ansprüche 1 bis 2, **dadurch gekennzeichnet, dass** als organikhaltiger Reststoff Papierfangstoff eingesetzt wird.

6. Verfahren nach einem der Ansprüche 1 bis 2, **dadurch gekennzeichnet, dass** als organikhaltiger Reststoff Klärschlamm eingesetzt wird.

7. Verfahren nach einem der Ansprüche 1 bis 6, **dadurch gekennzeichnet, dass** dem Gemisch vor dem Kalzinieren Zeolith und/oder Bentonit in einer Menge von maximal 5 % bezogen auf die Menge des Gemischs zugemischt werden.

## Claims

1. A method of making an oil-binding agent by using highly porous natural siliceous material and organic-containing residual material, **characterised in that** the highly porous natural siliceous material having an initial grain size of between 4 and 10 mm is mixed with the organic-containing residual material and the mixture is calcinated at a temperature between 520 and 550.degree. C., and then comminuted to a grain size spectrum ranging between 4 and 0.125 mm.

2. The method according to claim 1 **characterised in that** highly porous natural siliceous material and organic-containing residual material is used in a weight ratio between 75:25 and 95:5 based on the weight of the dry matter prior to calcination.

3. The method according to one of the claims 1 to 2, **characterised in that** as highly porous natural siliceous material, pumice, respectively pumice stone or pumice granulate is used.

4. The method according to one of the claims 1 to 2, **characterised in that** as highly porous natural siliceous material, foam lava or foamy volcanic rock is used.

5. The method according to one of the claims 1 to 2, **characterised in that** as organic-containing residual material, recovered paper material is used.

6. The method according to one of the claims 1 to 2, **characterised in that** as organic-containing material, sewage sludge is used.

7. The method according to one of the claims 1 to 6, **characterised in that** prior to calcination, zeolite or bentonite is mixed to the mixture in an amount of maximum 5% by weight based on the amount of the mixture.

## Revendications

1. Procédé de fabrication d'un agent d'absorption des huiles au moyen d'un matériau silicaté naturel à haute porosité et d'un résidu contenant des substances organiques, **caractérisé en ce que** le matériau silicaté naturel à haute porosité présente une granulométrie d'entrée comprise entre 4 et 10 mm étant mélangé au résidu contenant des substances organiques ; le mélange étant calciné à une température comprise entre 520° et 550° C, et ensuite broyé jusqu'à une plage granulométrique sensiblement comprise entre 4 et 0,125 mm.

2. Procédé selon la revendication 1, **caractérisé en ce qu'**un matériau silicaté naturel à haute porosité et un résidu contenant des substances organiques, sont utilisés dans un ratio pondéral compris entre 75:25 et 95:5 sur la base du poids de la matière sèche avant la calcination.

3. Procédé selon une des revendications 1 à 2, **caractérisé en ce qu'**on utilise les ponces et de la pierre ponce, respectivement des granulats de pierre ponce comme matériau silicaté naturel à haute porosité.

4. Procédé selon une des revendications 1 à 2, **caractérisé en ce qu'**on utilise, respectivement des granulats de pierre ponce comme matériau silicaté naturel à haute porosité.

5. Procédé selon une des revendications 1 à 2, **caractérisé en ce qu'**on utilise du résidu de papier comme résidu contenant de la matière organique.

6. Procédé selon une des revendications 1 à 2, **caractérisé en ce qu'**on utilise de la boue d'épuration comme résidu contenant de la matière organique.

7. Procédé selon une des revendications 1 à 6, **caractérisé en ce que** du zéolite et/ou du bentonite est mélangé au mélange avant la calcination dans une quantité de maximum 5% par rapport à la qantité du mélange.
